# EUROPEAN PATENT APPLICATION

(11) **EP 4 817 760 A1**
(43) Date of publication of application: **07.10.2026**
(21) Application number: 25167288.7
(22) Date of filing: 31.03.2025
(51) Int. Cl.: B22D 17/22, B29C 45/34, B29C 45/40

(54) **MOULD FOR INJECTION MOULDING AND/OR DIE CASTING AND A METHOD OF MANUFACTURING SUCH A MOULD**

(71) Applicant: MOLDINO Tool Engineering Europe GmbH, 40724 Hilden (DE)
(72) Inventor: ROTZOLL, Mark, 32584 Löhne (DE)
(74) Representative: Hoffmann Eitle

(57) **Abstract**

A mould (10) for injection moulding and/or die casting has an ejector side mould part (12) with plural ejector holes (14), into which plural ejector pins (16) are insertable from a first side (18), each ejector hole (14) having a taper (22) tapering towards a second side (20) opposite the first side (18) and located closer to the second side (20) than to the first side (18).

In a method of manufacturing a mould (10) for injection moulding and/or die casting, a taper (22) tapering towards a second side (20) opposite a first side (18), from which ejector pins (16) are insertable, and located closer to the second side (20) than to the first side (18), is formed by milling.

## Description

### TECHNICAL FIELD

The present invention relates to a mould for injection moulding and/or die casting and a method of manufacturing such a mould, in particular for manufacturing ejector holes thereof.

### BACKGROUND

The described moulds have a so-called ejector side mould part, in which plural ejector pins are guided in order to move the ejector pins to the effect that they eject injection moulded or diecast objects. In this context, the ejector pins are insertable from a first side into the ejector side mould part, the first side being opposite a side, at which the injection moulded or diecast objects are produced.

Such moulds are for example shown in CN 218777014 U, US 6474977 B1, CN 111391221 A, DD 223649 A1, DE 202012008429 U1, CN 213753389 U, WO 2012/041950 A1, EP 0385762 A2 and DE 102013207668 A1.

### SUMMARY OF THE INVENTION

In this context, smooth insertion of the ejector pins during assembly or maintenance work in the ejector mold presents a particular challenge. Therefore, one object underlying the invention is to provide a mold and a method for manufacturing the same, which can ensure efficient production of a mold in which the ejector pins can be smoothly inserted into the ejector molding during assembly and/or maintenance.

This object is, firstly, solved by the subject matter of claim 1.

Accordingly, the mould described herein has an ejector side mould part with plural ejector holes, into which plural ejector pins are insertable from a first side, and each ejector hole has a taper or conical section tapering towards the second side opposite the first side and located closer to the second side than to the first side.

It is noted that the ejector side mould part is essentially a relatively thick plate having the mentioned plural ejector holes. Further, the mentioned second side is that side, where the injection moulded or die cast objects, typically made of plastic, aluminum, zinc or magnesium alloys, are produced and ejected by the ejector pins.

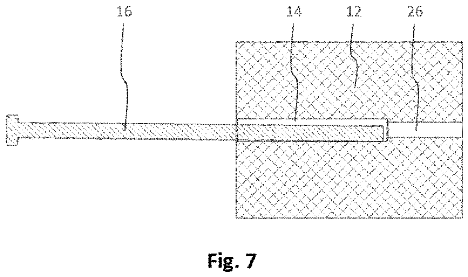

As indicated, guiding the ejector pins in the ejector side mould part is challenging, and the novel taper described herein, tapering towards the second side and being located closer to the second side than to the first side, ensures that the ejector pins can be quickly and smoothly inserted into the ejector mold side during assembly. Depending on the size of the ejector package and the ejector diameter (ø0.3mm - ø12mm), the ejector package can be inserted directly with all ejectors at the same time or each ejector individually. The described effect is essentially achieved by replacing a previously used relatively sharp edge at a position along the ejector hole, where a clearance hole, which is typically 0.1 to 0.2 mm larger in internal diameter than the ejector pin, borders the actual ejector guide, which has an internal diameter essentially corresponding to that of the ejector pin. Previously, there was a relatively large abutting edge (see Figure 7) at the transition between the clearance hole and the ejector guide (which is why the clearance hole was 1mm to 2mm larger than the ejector guide) and possibly a burr, so that ejector pins, which may be able to sink relatively deep (see Figure 7) due to the intended clearance tolerance in the ejector retaining plate and length, are blocked by the aforementioned abutting edge and a possible burr during assembly.

This is, as mentioned above, avoided by the taper described herein, so that the ejector pins can smoothly move along the transition between the clearance hole and the ejector guide into the ejector guide. At the same time, the described taper can be produced efficiently by means of milling, in particular from the above-described second side, by a suitable milling device, such as a five axis milling device. This further avoids the previous need for processing the ejector hole by means of wire cutting and in particular avoids the necessity of processing the ejector holes by means of two entirely different types of processing, namely milling and wire cutting. Rather, according to the invention, milling operations are sufficient and reduce production time and costs.

Moreover, the ejector hole being drilled and/or milled has the advantage of a significantly longer lifetime than a wire cut ejector hole. Finally, ejector holes formed with a taper as described above are expected to provide better lubrication for the ejector pins and/or can advantageously accommodate expansion gases and combustion residues.

Preferred embodiments are described in the further claims.

Further advantages are expected, when the taper is spaced from the second side. This essentially provides an ejector guide between the taper and the second side, so that the ejector pins are smoothly guided. In this context, a distance between the second side and the taper of at least three times the diameter of the ejector guide is preferred. As a maximum length of the ejector guide, five times the diameter thereof is preferred.

As described above, the taper essentially forms the transition between a clearance hole and the ejector guide. Nevertheless, it is preferred that the diameter of the clearance hole adjacent the taper towards the first side is smaller than the diameter of the taper adjacent the clearance hole towards the first side. In other words, the diameter, at the transition between the clearance hole and the taper, increases and then decreases towards the ejector guide due to the taper. The mentioned increased diameter allows for lubricant, such as grease, to be accommodated, so that lubrication as a whole can be improved.

It further facilitates insertion of the ejector pins into the clearance hole, when a further taper is provided adjacent the first side, in other words between the clearance hole and the first side.

In first simulations, an angle of 3 to 12 degrees for at least one of the mentioned tapers has proven efficient.

As regards the necessary ventilation of the mould, it has further proven beneficial when the ejector guide between the taper and the second side has at least one and for example, along its circumference, three to six ventilation grooves. In this context, a vacuum pump can be avoided. In other words, the novel mould has no vacuum pump and ventilation is provided by the ejector guide itself and not by the ejector pin, as it is known in the art. In this context, it should be noted that ejector pins sometimes need to be replaced, and in this case, when ventilation grooves or similar structures are provided on the ejector pins, the structures have to be produced anew on the pins. In contrast to this and advantageously, according to the preferred embodiment described above, the ejector guide, in other words the ejector side mould part, in which the ejector pins are guided, have the ventilation grooves, so that these can be provided once when producing the ejector side mould part and do not need to be renewed, when the ejector pins are replaced. Further, ejector pins with venting structures are relatively expensive and can, accordingly, be avoided by means of providing ventilation grooves in the ejector guides. Moreover, the venting structures, in particular venting grooves can be tailored to particular, special customer requirements. As regards this feature, namely the ejector guide having at least one ventilation groove, it should be emphasized that this is independent from any of the features mentioned above or hereinafter and is, independent from these, to be considered subject matter of the present disclosure. Nevertheless, it can be combined with any of the features mentioned above or hereinafter.

Ventilation can further be improved, when at least one ventilation groove has a reduced depth towards the second side.

It provides further advantages, in particular to prevent liquid plastic or other materials used from entering the ejector guides, when at least one ventilation groove is sealed towards the second side. Such a seal preferably has an axial length of 0.5 to 1.5 mm.

Ventilation can further be improved, when at least one ejector guide has at least one circumferential groove.

As already indicated above, the ejector guide preferably has an axial length of 3 to 5 times its diameter, in order to provide smooth guidance of the ejector pins.

The same applies to the measure, that the ejector guide has a diameter up to 0.2 and preferably at least 0.1 mm smaller than the clearance hole.

Finally, insertion of the ejector pins can further be facilitated, when the ejector holes have a chamfer, possibly in addition to the mentioned further taper, at the first side.

The method of manufacturing a mould in accordance with the invention is described in claim 13 and it is noted that any features mentioned above and below with regard to the mould are equally applicable to the method of manufacturing same and vice versa. In connection with the method described herein, it is preferred to drill at least one of a clearance hole, an ejector guide and the further taper.

### BRIEF DESCRIPTION OF THE DRAWINGS

Hereinafter, the invention is further described with reference to preferred embodiments thereof shown in the figures, in which
Figure 1 is a cut view of essential parts of a mould,
Figure 2 is a cut view of a part of an ejector side mould part,
Figure 3 to 6 are modifications of the structure shown in figure 2, and
Figure 7 is related to the prior art.

### DETAILED DESCRIPTION OF PREFERRED EMBODIMENTS

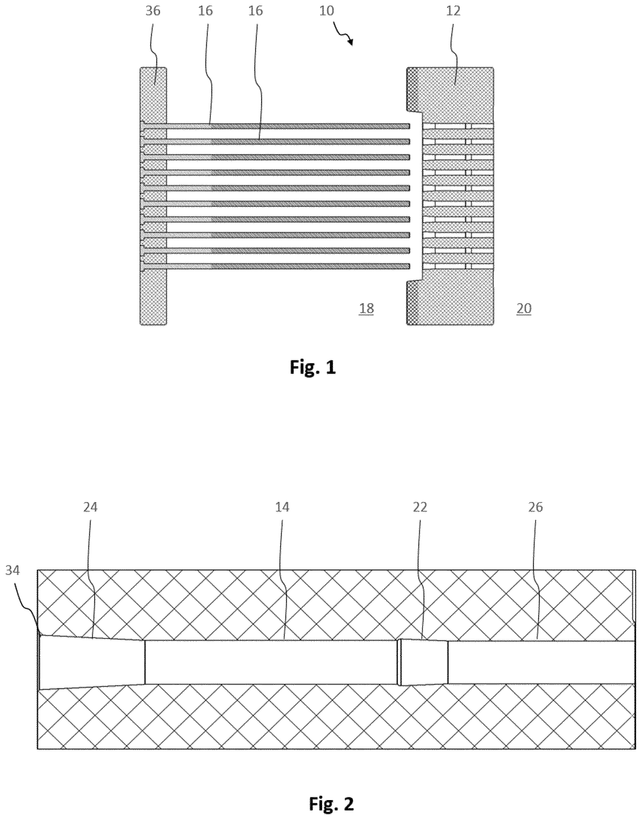

As can be seen in figure 1, in a mould 10 for injection moulding and/or die casting, plural ejector pins 16 are provided, which are mounted to an ejector retaining plate 36 and are insertable into a so-called ejector side mould part 12, in order to eject injection moulded or diecast objects present at a right side of the ejector side mould part according to the figure, herein referred to as the second side 20.

As can better be seen in figure 2, the eject holes have, from right to left in figure 2, essentially four sections, namely an ejector guide 26, a taper 22, a clearance hole 14 and a further taper 24. At the first side 18, see figure 1, a camfer 34 can be provided in order to facilitate insertion of the ejector pins in addition to the further taper 24. However, the novel taper 22 tapering towards the second side 20 and being located closer to the second side 20 than to the first side 18 can be seen in figure 2. In this context, it is further apparent, that the diameter of the taper 22 towards the clearance hole 14 is larger than the diameter of the clearance hole 14 itself. This, as mentioned above, allows the accommodation and/ absorption of lubricant and/or combustion residues. Further, the inner diameters of the mentioned sections apart from the tapers and the chamfer are essentially constant.

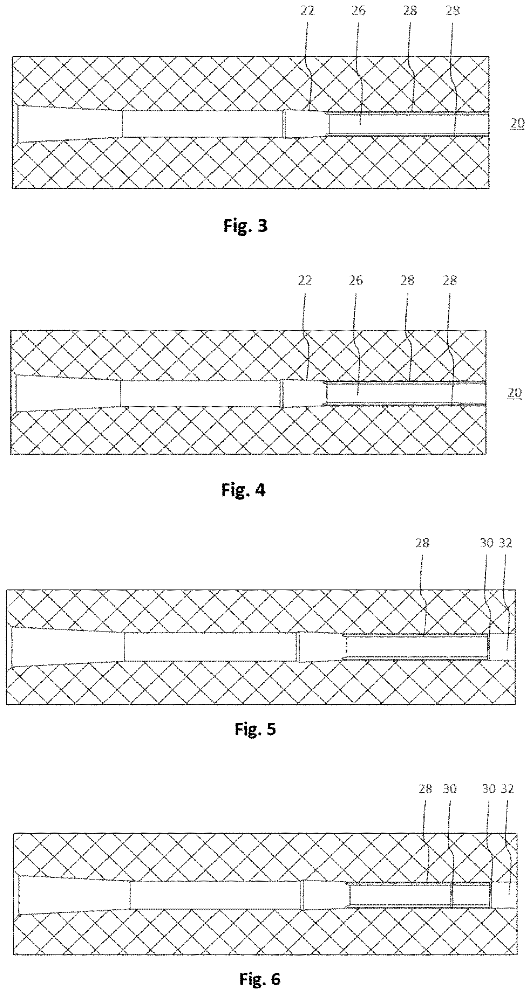

Figure 3 additionally shows ventilation channels or grooves 28 provided in the ejector guide 26 between the taper 22 and the second side 20. In this case, ventilation grooves 28 extend throughout the ejector guide 26.

According to figure 4, the depth of the ventilation grooves 28 is reduced at the end towards the second side 20.

As can be seen in figure 5, ventilation grooves do not necessarily have to extend all the way to the second side 20, and a circumferential groove 30 can be provided to connect the ventilation grooves 28 to each other. Moreover, a seal 32 can be provided between the circumferential groove 30 and the second side 20.

This also applies to the embodiment of figure 6, in which two circumferential grooves 30 are provided.

Figure 7 shows that there is, in the prior art, a relatively large abutting edge at the transition between the clearance hole 14 and the ejector guide 36,which is why the clearance hole was 1mm to 2mm larger than the ejector guide, and possibly a burr, so that ejector pins 16, which may be able to sink relatively deep due to the intended clearance tolerance in the ejector retaining plate (36, see Fig. 1) and length, are blocked by the aforementioned abutting edge and a possible burr during assembly.

## Claims

1. A mould (10) for injection moulding and/or die casting having an ejector side mould part (12) with plural ejector holes (14), into which plural ejector pins (16) are insertable from a first side (18), each ejector hole (14) having a taper (22) tapering towards a second side (20) opposite the first side (18) and located closer to the second side (20) than to the first side (18).

2. The mould (10) of claim 1, wherein the taper (22) is spaced from the second side (20).

3. The mould (10) of one of the preceding claims, wherein the diameter of a clearance hole (14) adjacent the taper (22) toward the first side (18) is smaller than the diameter of the taper (22) adjacent the clearance hole (14) toward the first side (18).

4. The mould (10) of one of the preceding claims, wherein a further taper (24) is provided adjacent the first side (18).

5. The mould (10) of claim 1 or 2, wherein at least one taper (22, 24) has an angle of 3 to 12 degrees.

6. The mould (10) of one of the preceding claims, wherein each ejector hole (14) has an ejector guide (26) between the taper (22) and the second side (20), the ejector guide (26) having at least one ventilation groove (28).

7. The mould (10) of claim 6, wherein at least one ventilation groove (28) has a reduced depth toward the second side (20).

8. The mould (10) of claim 6 or 7, wherein at least one ventilation groove (28) is sealed toward the second side (20), the seal (32) preferably having an axial length of 0.5 to 1.5 mm.

9. The mould (10) of one of claims 6 to 8, wherein at least one ejector guide (26) has at least one circumferential groove (30).

10. The mould (10) of one of claims 6 to 9, wherein the ejector guide (26) has an axial length of 3 to 5 times its diameter.

11. The mould (10) of one of claims 3 to 10, wherein the ejector guide (26) has a diameter up to 0.2 mm and preferably at least 0.1 mm smaller than the clearance hole (14).

12. The mould (10) of one of claims 6 to 9, wherein the ejector holes (26) have a chamfer (34) at the first side.

13. A method of manufacturing a mould (10) for injection moulding and/or die casting, wherein a taper (22) tapering towards a second side (20) opposite a first side (18), from which ejector pins (16) are insertable, and located closer to the second side (20) than to the first side (18), is formed by milling.

14. The method of claim 13, wherein at least one of a clearance hole (14) adjacent the taper (22) toward the first side (18), an ejector guide (26) adjacent the taper (22) toward the second side (20) and a further taper (24) at the first side (18) is drilled.

## Amended claims

### Amended claims in accordance with Rule 137(2) EPC.

1. A mould (10) for injection moulding and/or die casting having an ejector side mould part (12) with plural ejector holes (14), into which plural ejector pins (16) are insertable from a first side (18), each ejector hole (14) having a taper (22) tapering towards a second side (20) opposite the first side (18) and located closer to the second side (20) than to the first side (18) , wherein the diameter of a clearance hole (14) adjacent the taper (22) toward the first side (18) is smaller than the diameter of the taper (22) adjacent the clearance hole (14) toward the first side (18).

2. The mould (10) of claim 1, wherein the taper (22) is spaced from the second side (20).

3. The mould (10) of one of the preceding claims, wherein a further taper (24) is provided adjacent the first side (18).

4. The mould (10) of claim 1 or 2, wherein at least one taper (22, 24) has an angle of 3 to 12 degrees.

5. The mould (10) of one of the preceding claims, wherein each ejector hole (14) has an ejector guide (26) between the taper (22) and the second side (20), the ejector guide (26) having at least one ventilation groove (28).

6. The mould (10) of claim 5, wherein at least one ventilation groove (28) has a reduced depth toward the second side (20).

7. The mould (10) of claim 5 or 6, wherein at least one ventilation groove (28) is sealed toward the second side (20), the seal (32) preferably having an axial length of 0.5 to 1.5 mm.

8. The mould (10) of one of claims 5 to 7, wherein at least one ejector guide (26) has at least one circumferential groove (30).

9. The mould (10) of one of claims 5 to 8, wherein the ejector guide (26) has an axial length of 3 to 5 times its diameter.

10. The mould (10) of one of claims 1 to 9, wherein the ejector guide (26) has a diameter up to 0.2 mm and preferably at least 0.1 mm smaller than the clearance hole (14).

11. The mould (10) of one of claims 5 to 9, wherein the ejector holes (26) have a chamfer (34) at the first side.

12. A method of manufacturing a mould (10) for injection moulding and/or die casting, wherein a taper (22) tapering towards a second side (20) opposite a first side (18), from which ejector pins (16) are insertable, and located closer to the second side (20) than to the first side (18), is formed by milling, wherein the diameter of a clearance hole (14) adjacent the taper (22) toward the first side (18) is formed smaller than the diameter of the taper (22) adjacent the clearance hole (14) toward the first side (18).

13. The method of claim 12, wherein at least one of a clearance hole (14) adjacent the taper (22) toward the first side (18), an ejector guide (26) adjacent the taper (22) toward the second side (20) and a further taper (24) at the first side (18) is drilled.
